# EUROPÄISCHE PATENTSCHRIFT

(11) **EP 3 625 522 B1**
(45) Veröffentlichungstag und Bekanntmachung des Hinweises auf die Patenterteilung: **26.01.2022**
(21) Anmeldenummer: 18725180.6
(22) Anmeldetag: 15.05.2018
(51) Int. Cl.: G01D 5/04, G01D 5/14, F16H 55/06, G01P 3/487

(54) **MULTITURN-WINKELMESSGERÄT**
MULTITURN ANGLE MEASURING DEVICE
APPAREIL DE MESURE D'ANGLE MULTITOUR

(30) Priorität: 16.05.2017 DE 102017004672
(43) Veröffentlichungstag der Anmeldung: 25.03.2020
(73) Patentinhaber: Hengstler GmbH, 78554 Aldingen (DE)
(72) Erfinder: LINDEN, Martin, 78166 Donaueschingen (DE); KLAEGER, Kai, 78628 Rottweil (DE); BLUST, Thorsten, 78652 Deisslingen (DE)
(74) Vertreter: Riebling, Peter
(86) Internationale Anmeldenummer: PCT/EP2018/062489
(87) Internationale Veröffentlichungsnummer: WO 2018/210797

(56) Entgegenhaltungen:
- EP-A2- 1 391 696
- DE-A1-102006 044 855
- DE-A1-102008 051 083
- DE-A1-102008 053 526
- DE-A1-102012 200 239

## Beschreibung

Die Erfindung betrifft ein Multiturn-Winkelmessgerät zur Messung der Mehrfachumdrehung einer Welle, wobei die Erfindung von einem Multiturn-Winkelmessgerät ausgeht, welches eine Singleturnerfassung auf optischem Weg besitzt und eine Multiturnerfassung, die mit magnetischer Abtastung arbeitet.

Die Erfindung geht von der EP 1 391 696 A2 aus, bei der ein Multiturn-Winkelmessgerät mit einer optischen Singleturn-Abtastung und einer magnetischen Multiturn-Abtastung beschrieben ist.

Nachteil des bekannten Multiturn-Winkelmessgerätes ist, dass ein aufwendiges und spielbehaftetes Untersetzungsgetriebe verwendet wird, welches ein Schneckenrad verwendet, welches mit erheblichem Spiel mit den übrigen Getriebezahnrädern zusammen wirkt, sodass sich nur eine ungenügende Multiturn-Winkelabtastung mit einem entsprechenden schnellen Verschleiß des Getriebes ergibt.

Ein weiterer Nachteil ist die Befestigung der Permanentmagneten im Getriebeaufbau, was zu einem nicht-kompakten Aufbau führt, denn die Permanentmagnete sind mit eigenen Halterungen oberhalb der Getriebezahnräder angeordnet und nicht in diesen integriert.

Außerdem ergibt sich ein hoher Montageaufwand durch das Einkleben der Magnete an dem außerhalb des Getriebeaufbaus angeordneten Codeträger, was die Bauhöhe vergrößert und mit der Gefahr der Verlierbarkeit verbunden ist, wenn der Klebstoff bei längerer Lebensdauer versagt.

Außerdem ist der Einklebevorgang mit einem gewissen Spiel behaftet, welches aufgrund der maschinellen Verarbeitung nicht minimiert werden kann.

Das bekannte Multiturn-Winkelmessgerät zeichnet sich im Übrigen dahingehend aus, dass auf der einen Seite einer Leiterplatte die optische Singleturn- Abtastung angeordnet ist, während auf der gegenüberliegenden Seite die magnetisch arbeitende Multiturn-Winkelabtastung angeordnet ist. Hierdurch ergibt sich zwar ein kompakter Aufbau, der jedoch noch weiter minimiert werden kann.

Der Erfindung liegt deshalb ausgehend von dieser Druckschrift die Aufgabe zugrunde, ein Multiturn-Winkelmessgerät der eingangs genannten Art so weiter zu bilden, dass bei einem wesentlich gesteigerten kompakten Aufbau eine kostengünstige Fertigung mit einer möglichst spielfreien Anordnung der Permanentmagnete gegeben ist.

Zur Lösung der gestellten Aufgabe ist die Erfindung durch die technische Leere des Anspruches 1 gekennzeichnet.

Merkmal der Erfindung ist, dass die Permanentmagnete unmittelbar im Getriebeaufbau integriert sind und zwar dergestalt, dass sie unmittelbar in das jeweilige, zugeordnete Getriebezahnrad durch eine Umspritzung eingebettet sind, und dass das jeweilige Getriebezahnrad selbst, welches den jeweiligen Permanentmagneten trägt, auf der zugeordneten Achse mit einer Einschnappsicherung gesichert ist.

Mit der gegebenen technischen Leere ergibt sich gegenüber dem Stand der Technik der Vorteil, dass nun eine spielfreie einfache Befestigung der jeweiligen Permanentmagneten auf dem Getriebezahnrad möglich ist, denn erfindungsgemäß ist vorgesehen, dass der jeweilige Permanentmagnet im Kunststoffmaterial des Getriebezahnrades durch Umspritzung eingebettet ist.

Hieraus ergibt sich ein besonders einfacher Aufbau, der besonders kompakt ist, weil bei der Herstellung des Getriebezahnrades im Kunststoffspritzgussverfahren der Permanentmagnet unmittelbar in die Spritzgussform eingelegt und bei der Herstellung des Getriebezahnrades bei der Kunststoffeinspritzung in die Form mit im Kunststoff des Getriebezahnrades eingebettet wird.

Damit wird auf aufwendige und betriebsanfällige Klebeverbindungen verzichtet, wie es der Stand der Technik zeigt und die passgenaue Orientierung des Permanentmagneten am Getriebezahnrad ist stets gleich und nicht mit einem Spiel behaftet, wie es bei Klebeverbindungen in Kauf genommen werden muss.

Nach einem weiteren Merkmal der Erfindung ist vorgesehen, dass die Magnetisierung des Permanentmagneten unmittelbar in der Spritzgussform selbst erfolgt, und zwar nach dem Umspritzen des Permanentmagneten in dem Kunststoffmaterial des Getriebezahnrades, wodurch der Vorteil besteht, dass eine stets gleichbleibende Magnetkraft erzeugt wird, die nicht von anderen umspritzten Permanentmagneten in anderen Getriebezahnrädern abweicht.

Nach einem weiteren Merkmal der Erfindung ist vorgesehen, dass eine Einschnappverbindung zwischen dem, den eingebetteten Permanentmagneten tragenden Getriebezahnrad und der Achse erfolgt, auf welcher das Getriebezahnrad drehbar gelagert ist.

Der einfacheren Beschreibung wegen wird in der folgenden Beschreibung nur noch einfach von einem "magnetischen Getriebezahnrad" gesprochen, und damit ist gemeint, dass in einem aus Kunststoff und magnetisch nicht leitfähigen Getriebezahnrad mindestens ein Permanentmagnet durch Umspritzung eingebettet ist.

In einer bevorzugten Ausgestaltung ist es vorgesehen, dass der Permanentmagnet lediglich an einer Stirnseite frei bleibt, nämlich an der unteren Stirnseite, wo ein genau einzuhaltender präziser Abstand zu einem darunter angeordneten Hallelement vorgesehen sein soll.

Die Stirnseite des in dem Kunststoffmaterial des Getriebezahnrades eingebetteten Permanentmagneten ist deshalb im Wesentlichen frei und hat nur noch der Herausfallsicherung dienende Haltelappen, die sich nur teilweise über die dort freie Stirnseite des Permanentmagneten erstrecken.

Damit wird eine vollständig freiliegende Stirnseite des Permanentmagneten in einen genau präzisen Abstand gegenüberliegend zu einem Hallelement gebildet.

Damit sich dieser Abstand nicht verändert, ist als weiteres Merkmal vorgesehen, dass das Drehlager des magnetischen Getriebezahnrades durch eine feststehende Achse gebildet ist, die in einer Trägerplatte fest verankert ist.

Sie ist z.B. in der Trägerplatte eingespritzt und über eine längere axiale Länge stabil und verbiegungsgesichert geführt, sodass die Achse verbiegungsgesichert und in axialer Richtung vollständig fixiert in der Trägerplatte eingespritzt ist.

Vorteilhaft ist, dass eine Einschnappsicherung als Drehlager zwischen dieser feststehenden Achse und dem magnetischen Getriebezahnrad vorgesehen ist, was eine besonders einfache Lagerung bedeutet.

Damit ist einerseits eine einfache Montage möglich, indem das magnetische Getriebezahnrad einfach auf eine im Durchmesser verringerte Ringnut der Achse aufgesteckt wird und somit gehalten wird.

In einer kinematischen Umkehrung kann es jedoch auch vorgesehen sein, dass die Achse einen im Durchmesser vergrößerten Ringwulst trägt, der in eine zugeordnete, im Durchmesser verminderte Ringnut am Innenumfang der Bohrung im magnetischen Getriebezahnrad eingreift.

Es handelt sich demnach um eine einfache Aufstecksicherung, die normalerweise mit dem Nachteil eines gewissen axialen Spiels verbunden ist.

Hier setzt nun die Erfindung ein, die vorsieht, dass die Achse aus einem magnetisch leitfähigen Material besteht, sodass eine ständige gegenseitige Anziehungskraft zwischen dem unterhalb der Achse und mit geringem Abstand zur Stirnseite der Achse eingebetteten Permanentmagneten und dem magnetisch leitfähigen Material der feststehenden Achse stattfindet.

Auf diese Weise wird sichergestellt, dass der in dem magnetischen Getriebezahnrad eingebettete Permanentmagnet stets eine Zugkraft auf die Achse ausübt und somit das gesamte magnetische Getriebezahnrad mit einer bestimmten axialen Vorspannung gegenüber der Einschnappsicherung vorspannt und im Übrigen noch gegenüber einem feststehenden gehäuseseitigen Anschlag zur Anlage bringen kann.

Der Anschlag ist so ausgebildet, dass sich zwar das magnetische Getriebezahnrad mit einer bestimmten Stirnseite an der gehäusefesten Anlagefläche reiben kann, dass aber dieser Anschlag stets fest bleibt und keinerlei axiales Spiel aufweist.

Mit der technischen Lehre, dass das magnetische Getriebezahnrad aufgrund magnetischer Haltekraft und Vorspannkraft auf der magnetisch leitfähigen Achse festgelegt ist, ergibt sich der Vorteil, dass ein spielfreier, genau gleichbleibender und unveränderbarer Abstand zwischen der Stirnseite des Permanentmagneten und dem darunter liegenden Hallelement gegeben ist.

Damit wird eine stets gleichbleibende Beaufschlagung der Hallsensoren mit einer gleichbleibenden Permanentmagnetkraft gewährleistet, ohne dass es zur Schwächung des Magnetfeldes kommt oder zur Abweichung im gegenseitigen Abstand zwischen den Permanentmagneten und der magnetisch empfindlichen Oberfläche des Hallelementes.

Die magnetische Anziehungskraft zwischen dem, den Permanentmagneten tragenden Getriebezahnrad und der magnetisch leitfähigen Achse wird jedoch nur in Ausnahmefällen beansprucht, weil die Einschnappsicherung bereits schon in ihrer Genauigkeit so präzise gewählt ist, dass ohnedies keine axiale Verschiebung zwischen dem magnetischen Getriebezahnrad und der Achse besteht, auf welche das Getriebezahnrad aufgesteckt ist.

Nur in Ausnahmefällen, wenn es zu Schwingungen oder Vibrationen kommen sollte, dient noch die magnetische Haltekraft zwischen der oberen Stirnseite des Permanentmagneten und der gegenüberliegenden Stirnseite der magnetisch leitfähigen Achse dazu, eine zusätzliche axiale Haltekraft zu erzeugen, die der Haltekraft der Aufschnappverbindung überlagert ist.

Die Einbettung der Permanentmagnete im magnetisch neutralen Kunststoffmaterial des magnetischen Getriebezahnrades ist besonders einfach und kostengünstig und ist im Ergebnis nicht mit den aufwendigen Montageverfahren nach dem Gegenstand der EP 1 391 696 A2 zu vergleichen, wo in einem mehrstufigen Befestigungsverfahren der Permanentmagnet mit dem zugehörenden magnetischen Getriebezahnrad verbunden werden muss.

Wie beim Stand der Technik bekannt, ist eine einstöckige Anordnung bei Multiturn-Winkeldrehgebern bekannt, was bedeutet, dass die Leiterplatte sowohl an ihrer einen Seite eine optische Singleturn-Abtastung aufweist und an der gegenüberliegenden Seite eine magnetisch arbeitende Multiturn-Abtastung.

Hieraus ergibt sich ein besonders kompakter Aufbau.

In besonderen Anwendungsfällen ist es jedoch bevorzugt, dass anstatt des einstöckigen Aufbaus mit einer einzigen Leiterplatte nunmehr ein zweistöckiger Aufbau vorgesehen wird, der nach einem weiteren Merkmal der Erfindung darin besteht, dass insgesamt zwei Leiterplatten in gegenseitigem Abstand zueinander angeordnet sind.

Ein solcher zweistöckiger Aufbau wird besonders dann bevorzugt, wenn der Bauraum für die Anordnung der Bauelemente auf einer einzigen Leiterplatte nicht mehr ausreicht und es erforderlich ist, eine zweite Leiterplatte zu verwenden.

In diesem Fall sind zwei im gegenseitigen Abstand zueinander parallel angeordnete Leiterplatten vorhanden, wobei z.B. auf der zweiten Leiterplatte ein relativ raumgreifender Mikrocontroller oder höherbauende Bauteile angeordnet sein können, die bei einer einlagigen Anordnung mit einer einzigen Leiterplatte nicht untergebracht werden können.

Ein solcher zweistöckiger Aufbau zeichnet sich dadurch aus, dass wiederum in der vorher beschriebenen Weise auf der im mittleren Aufbau (1. Stock) angeordneten Leiterplatte nunmehr ebenfalls - wie bekannt - auf der einen Seite die optische Singleturn- Abtastung und auf der gegenüberliegenden Seite die magnetische Multiturn- Abtastung angeordnet sind, dass aber im Abstand darüber - und zwar jenseits der magnetischen Multiturn-Abtastung und oberhalb eines Getriebes, welches zu der magnetischen Multiturn-Abtastung gehört, noch eine zweite Leiterplatte angeordnet ist.

In diesem Fall findet dann die magnetische Abtastung nicht mehr an der unteren Leiterplatte statt, sondern die Abtastung ist so verlegt, dass das Untersetzungsgetriebe nunmehr nach oben gewendet ist und die Möglichkeit bietet, dass die nach oben gerichteten Permanentmagneten der magnetischen Getriebezahnräder es nunmehr ermöglichen, dass oberhalb dieses Getriebes eine weitere Leiterplatte angeordnet ist, welche gleichzeitig die Deckplatte des Gehäuses bildet und an deren Unterseite nunmehr die Hallsensoren angeordnet sind, die mit dem getriebeseitigen Permanentmagneten, die in den magnetischen Getriebezahnrädern eingebettet sind, zusammen arbeiten.

Bei der vorher erwähnten einstöckigen Ausbildung steht jedoch nichts dagegen, auch eine zweite Leiterplatte oben auf der oberen Stirnseite des Getriebes anzuordnen, wenn genügend Bauraum vorhanden ist.

Bei der zweistöckigen Variante ist jedoch vorgesehen, dass die magnetische Abtastung und die optische Abtastung im Bereich einer einzigen Leiterplatte voneinander getrennt sind und nunmehr auf der einen - im mittleren Bereich des Multiturn-Drehgebers angeordnete Leiterplatte nur noch der optischen Abtastung dient und die andere, den oberen Aufbau des Gehäuses begrenzende weitere Leiterplatte, nunmehr der magnetischen Abtastung des Multiturn-Winkeldrehgebers dient.

Damit ergibt sich ebenfalls der Vorteil eines kompakten Aufbaus, weil die obere Leiterplatte mit darunter liegenden Hallsensoren unmittelbar den magnetischen Getriebezahnrädern des Getriebes gegenüberliegt.

Die Erfindung geht davon aus, dass insgesamt ein Untersetzungsgetriebe mit drei magnetisch angetriebenen Getriebezahnrädern vorhanden ist, wobei in jedem magnetischen Getriebezahnrad - wie oben stehend beschrieben - ein Permanentmagnet eingebettet ist.

Dies bedeutet, dass bei der Verwendung von drei magnetischen Getriebezahnrädern, die in einem Getriebeaufbau angeordnet sind, eine Untersetzung des Winkels einer Antriebswelle im Verhältnis von 1:16 zum ersten magnetischen Getriebezahnrad, dann von diesem ausgehend eine weitere Untersetzung von 1:16 zu dem zweiten magnetischen Getriebezahnrad und von diesem ausgehend eine weitere Untersetzung von 1:16 zum dritten magnetischen Getriebezahnrad stattfindet.

Insgesamt handelt es sich also um eine Untersetzung im Verhältnis von 1:4096.

Die Erfindung ist selbstverständlich nicht auf die Anordnung von drei Untersetzungszahnrädern beschränkt.

Es können stattdessen auch nur zwei Getriebezahnräder verwendet werden oder mehr als drei.

Es wird deshalb nur beispielhaft ein Ausführungsbeispiel näher beschrieben, bei dem drei in einem Untersetzungsaufbau eines Getriebes angeordnete Getriebezahnräder vorhanden sind, ohne dass die Erfindung darauf beschränkt ist.

Wichtig ist jedenfalls, dass jedes magnetische Getriebezahnrad den vorher erwähnten Permanentmagneten eingebettet trägt und die Aufnahmesicherung mit axialer Vorspannung vorhanden ist.

In der Weiterbildung der vorliegenden Erfindung ist auch eine hierfür geeignete Auswerteschaltung vorgesehen, die darin besteht, dass die Signale der einzelnen Permanentmagnete (die 3-fach vorhanden sind und in dem Untersetzungsaufbau des Getriebes integriert sind) nunmehr in besonders günstiger Weise ausgewertet werden.

Zu diesem Zweck ist eine Auswerteschaltung vorgesehen, die in einer ersten Stufe einen ersten Sensor vorsieht, indem der jeweilige Hallsensor eingebettet ist, wobei in einer bevorzugten Ausgestaltung insgesamt vier Hallsensorelemente in einer bestimmten Matrix angeordnet sind und im Sensor eingebettet sind.

Ein solcher Sensor ist demnach jeder Stufe mit einer Matrix aus Hallsensoren zugeordnet und bei der Auswerteschaltung ist wichtig, dass der Ausgang der ersten Stufe direkt und unmittelbar auf den Eingang der zweiten Sensorstufe geschaltet ist und dass der Ausgang der zweiten Sensorstufe unmittelbar auf den Eingang der dritten Sensorstufe geschaltet ist, deren Ausgang unmittelbar das zusammengesetzte Singleturn + Multiturn-Codewort in serieller Form ausgibt.

Damit wird also eine Daisy-Chain-Durchführung der Sensorsignale durch alle Sensorstufen ermöglicht, was neu und erfinderisch gegenüber dem Stand der Technik ist.

Beim Stand der Technik erfolgt eine Parallelauswertung der einzelnen Stufen in einem zentralen Baustein, der als Auswertebauteil separat integriert werden muss, während bei der vorliegenden Erfindung ein besonders kompakter und einfacher Aufbau dadurch gegeben ist, dass in den Sensoren gleichzeitig auch die Auswerteschaltungen für die dort matrixartig angeordneten Hallsensoren angeordnet sind.

Es wird also auf eine zentrale Auswerteinstanz verzichtet, was Platz auf der Leiterplatte spart und zu einer weiteren Verbesserung des kompakten Aufbaus führt.

Die Signale, die jeweils am Ausgang der jeweiligen Sensorstufe ausgegeben werden und in den Eingang der nachfolgenden Sensorstufe eingespeist werden, sind digitale Datenwörter, die in serieller Form verarbeitet werden und in serieller Form von der einen Sensorstufe zu der Anderen weitergeleitet werden.

Bei der Singleturn-Auswerteschaltung ist wesentlich, dass die Ausgabe der Singleturn-Auswerteschaltung unmittelbar als Eingang der ersten Multiturn-Auswerteschaltung geschaltet ist, sodass die Signale der Singleturn-Auswerteschaltung den Eingang der ersten Sensorstufe der Multiturn-Auswertung ergeben.

Vorstehend wurde angegeben, dass eine stabile axiale Verschiebungssicherung des magnetischen Getriebezahnrades durch magnetische Zugkraftausübung auf die magnetisch wirksame Achse gegeben ist.

Wenn man eine derartige Befestigung mit magnetischer Vorspannung auf die Achse nicht wünscht, kann es in einer anderen Ausgestaltung vorgesehen sein, dass jeder Hallsensor an seinem Außenumfang durch einen abstandshaltenden Abstandsring umgeben ist und auf dem Abstandsring unmittelbar - ohne Spiel - der Permanentmagnet sitzt, der im magnetischen Getriebezahnrad eingebettet ist.

Es ergibt sich hier zwar eine gewisse Reibung, die aber in Kauf genommen wird, weil die Materialien selbstschmierend sind.

Statt einer vorgespannten spielfreien Lagerung, die über Magnetkraft vorgespannt wird, ist in einer zweiten Ausgestaltung deshalb vorgesehen, dass die magnetisch vorgespannte Lagerung des magnetischen Getriebezahnrades entfällt und dass es ohne Aufschnappverbindung als Drehlager nun satt auf dem jeweiligen leiterplattenseitigen Abstandsring aufsitzt.

Im Folgenden wird die Erfindung anhand von lediglich einen Ausführungsweg darstellenden Zeichnungen näher erläutert. Hierbei gehen aus den Zeichnungen und ihrer Beschreibung weitere erfindungswesentliche Merkmale und Vorteile der Erfindung hervor.

Es zeigen:
- Figur 1:: perspektivische Ansicht eines Multiturn- Drehgebers
- Figur 2:: die Seitenansicht des Drehgebers nach Figur 1
- Figur 3:: eine Detaildarstellung gemäß dem Detail III in Figur 2
- Figur 4:: eine perspektivische Ansicht einer Leiterplatte
- Figur 5:: die perspektivische Ansicht der Leiterplatte nach Figur 4 mit der optimalen Anbringung von Abstandsringen
- Figur 6:: eine Trägerplatte für das Untersetzungsgetriebe
- Figur 7:: das fertig bestückte Untersetzungsgetriebe in Verbindung mit der Trägerplatte nach Figur 6
- Figur 8:: die Darstellung der Montage des Getriebes nach Figur 6 und 7 auf der Leiterplatte nach Figur 5
- Figur 9:: der fertiggestellte Zusammenbau der Anordnung nach Figur 8
- Figur 10:: ein Teilschnitt in Höhe der Schnittlinie X- X in Figur 1
- Figur 11:: ein gleicher Teilschnitt wie Figur 10 mit Darstellung weiterer Einzelheiten
- Figur 12:: eine gegenüber Figur 11 abgewandelte Ausführungsform mit einem zwei- stöckigen Aufbau des Drehgebers
- Figur 13:: schematisiert ein Funktionsschaltbild einer elektrischen Auswerteschaltung für den Multiturn- Drehgeber
- Figur 14:: schematisiert ein Funktionsschaltbild für die Singleturn-Auswertung

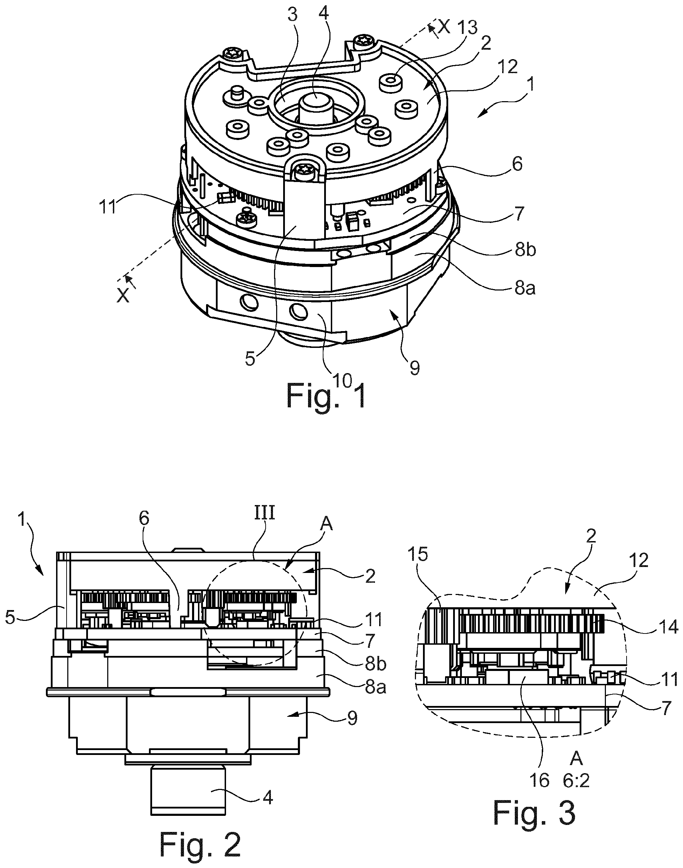

In Figur 1 bis 3 ist ein Multiturn-Drehgeber 1 dargestellt, der im Wesentlichen aus einem oberen Untersetzungsgetriebe 2 besteht, dessen Trägerplatte 12 aus einem Kunststoffmaterial besteht.

In einer anderen Ausgestaltung kann es auch vorgesehen sein, dass diese Trägerplatte 12 aus einem Leichtmetalldruckgussmaterial besteht.

Das Untersetzungsgetriebe 2 weist eine mittige Ausnehmung 3 auf, durch die das freie Ende einer Welle 4 hindurch ragt, deren Drehwinkel vom Multiturn-Drehgeber erfasst werden soll.

Die Trägerplatte 12 stützt sich gegenüber einer darunter liegenden Leiterplatte 7 mit Hilfe von gleichmäßiger im Umfang verteilt angeordneten axialen Lappen 5 ab und am Umfang dazwischenliegend sind Stützen 6 an der Unterseite der Trägerplatte 12 angeformt, die sich an der Oberseite der Leiterplatte 7 abstützen.

Das bevorzugt aus einem Metallmaterial bestehende Gehäuse 9 ist ringförmig ausgebildet und weist einen nach oben gerichteten Ringflansch 8a auf, der sich in einem weiteren Ringflansch 8b fortsetzt.

Auf diesem Ringflansch 8b ist die Leiterplatte 7 befestigt.

An der einen Stirnseite ist eine Befestigungsplatte 10 mit Lochaufnahmen am Gehäuse 9 vorgesehen, sodass das Gehäuse 9 an einer zugeordneten Montagefläche festgesetzt werden kann.

In Figur 3 ist das Detail des Schnitts aus Figur 2 zu erkennen, wo erkennbar ist, dass auf der Leiterplatte 7 eine Anzahl von Bauelementen 11 angeordnet sind, die sich in Richtung auf die Unterseite des darüber liegenden Getriebes 2 erstrecken.

Es sind eine Anzahl von Getriebezahnrädern 14, 15 vorhanden, die anhand der nachfolgenden Zeichnungen näher beschrieben werden.

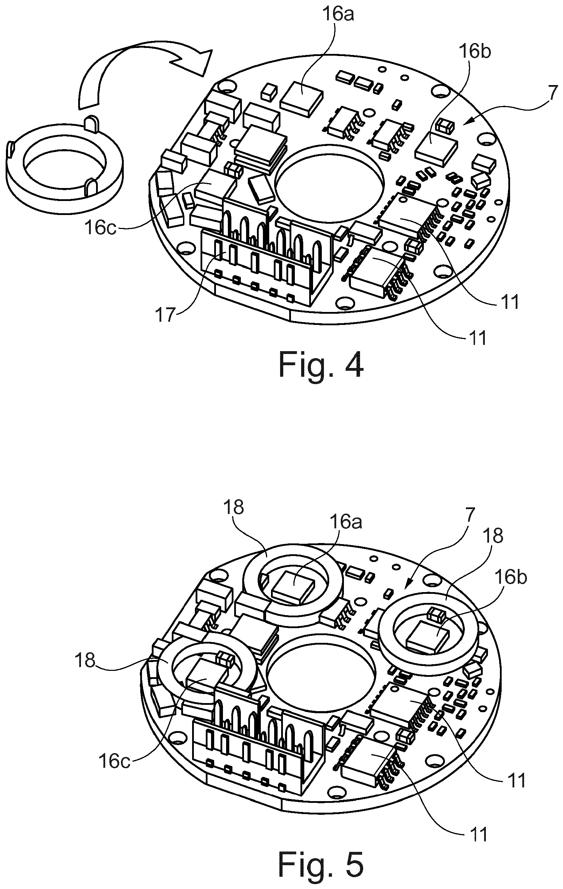

Die Figur 4 zeigt eine perspektivische Ansicht der Leiterplatte 7 wo erkennbar ist, dass drei Hallsensoren 16a, b und c in gegenseitigem Abstand und versetzt zueinander vorhanden sind, die mit entsprechenden elektronischen Bauteilen kombiniert sind, die insgesamt mit dem Bezugszeichen 11 bezeichnet sind.

Ferner kann auf der Leiterplatte 7 noch ein Anschlussstecker 17 angeordnet sein.

In Figur 1 ist noch erkennbar, dass in der Trägerplatte 12 Achsaufnahmen 13 für die später zu beschreibenden Achsen des Getriebes vorhanden sind, in denen die Achsen drehfest eingebettet sind.

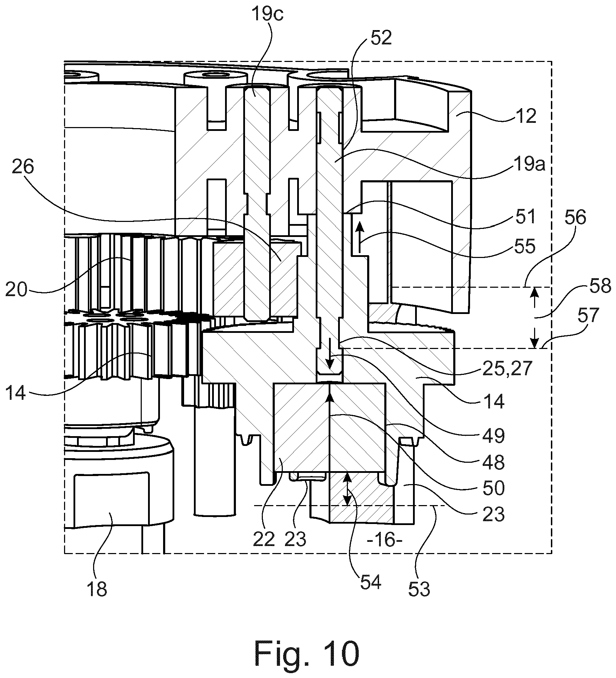

Die Figur 5 zeigt als optionale Ausführungsform im Vergleich zur Figur 10, dass zur Abstandshaltung zwischen dem Permanentmagneten 22, die in den magnetischen Getriebezahnrädern 14 eingebettet sind, und der Oberfläche der zugeordneten Hallsensoren 16a, 16b und 16c abstandshaltende Abstandsringe 18 vorgesehen sind, welche bevorzugt den jeweiligen Hallsensor vollständig umgeben und in ihrer axialen Erstreckung etwas höher ausgebildet sind als die Oberfläche des jeweiligen Hallsensors 16, um so einen genau definierten Abstand zu bilden.

Auf der Oberfläche des Abstandsringes 18 sitzt dann der jeweilige Permanentmagnet 22 auf.

Es wird später noch dargestellt - siehe Figur 10 -, dass die Abstandsringe 18 auch vollständig entfallen können und dass durch andere Maßnahmen - gemäß dem unabhängigen Anspruch 1 - auch eine präzise Abstandseinstellung zwischen den jeweiligen Permanentmagneten 22 und dem Hallsensor 16 erreicht werden kann und demzufolge auf die reibungserhöhenden Abstandsringe 18 verzichtet werden kann.

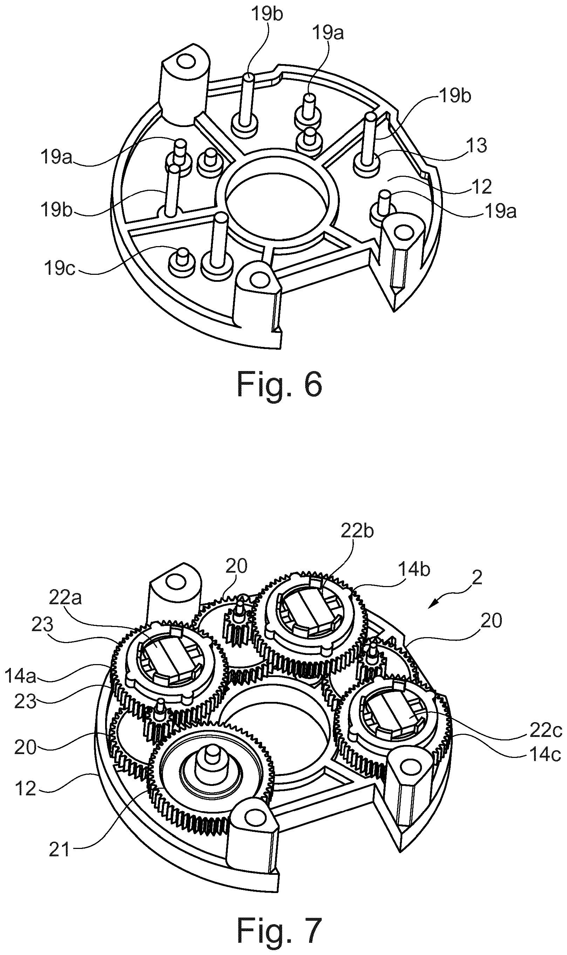

Die Figur 6 zeigt die Unterseite der Trägerplatte 12, wo erkennbar ist, dass eine bestimmte Anzahl von einer ersten Sorte von Achsen 19a in die zugeordneten

Achsaufnahmen 13 eingespritzt sind und somit drehfest und verschiebungsgesichert, sowie gegen Ausknickung gesichert, gelagert sind.

Es sind auch kürzere Achsen 19b vorhanden, welche der Lagerung der Zwischenringe des Getriebes dienen.

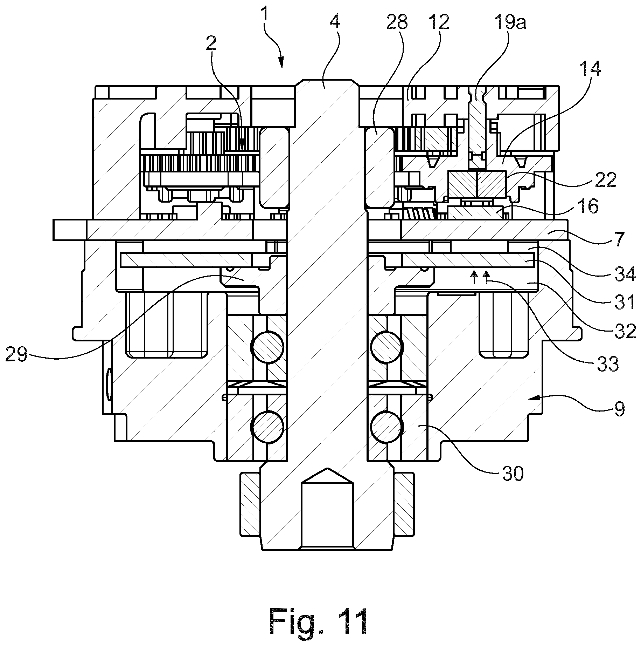

Die Figur 7 zeigt den Getriebeaufbau, bei dem ein Antriebsrad 21 mit einem drehfest mit der Antriebswelle 4 verbundenen Antriebsritzel 28 kämmt (siehe Figur 11).

Das Antriebsrad 21 wirkt im Sinne einer Getriebeuntersetzung 1:16 auf ein Getriebezahnrad 20, welches seinerseits aus einem Ritzelzahnrad und aus einem im Durchmesser größeren Zahnrad besteht.

Das größere Zahnrad im Getriebezahnrad 20 kämmt mit einem nicht näher gestellten, kleineren Ritzelzahnrad, welches drehfest mit dem jeweiligen Getriebezahnrad 14a, 14b, 14c verbunden ist.

Auf diese Weise wird eine untere Antriebsebene 56 (siehe Figur 10) von den als Zwischenglieder arbeitenden Getriebezahnrädern 20 gebildet und es gibt im Abstand 58 dazu eine obere Antriebsebene 57, die von den einzelnen, magnetischen Getriebezahnrädern 14a, 14b, 14c gebildet ist.

Es wird noch in Bezug zur Figur 6 und 7 angefügt, dass die in ihrer axialen Länge längeren Achsen 19b der Lagerung der Getriebezahnräder 20 dienen, während die kürzeren Achsen 19a aus einem magnetisch leitfähigen Material bestehen und der Lagerung der magnetischen Getriebezahnräder 14 dienen.

Auf diese Weise wird ausgehend von dem Antriebsrad 21 bis zum letzten magnetischen Getriebezahnrad 14c eine Untersetzung 1:4096 erreicht.

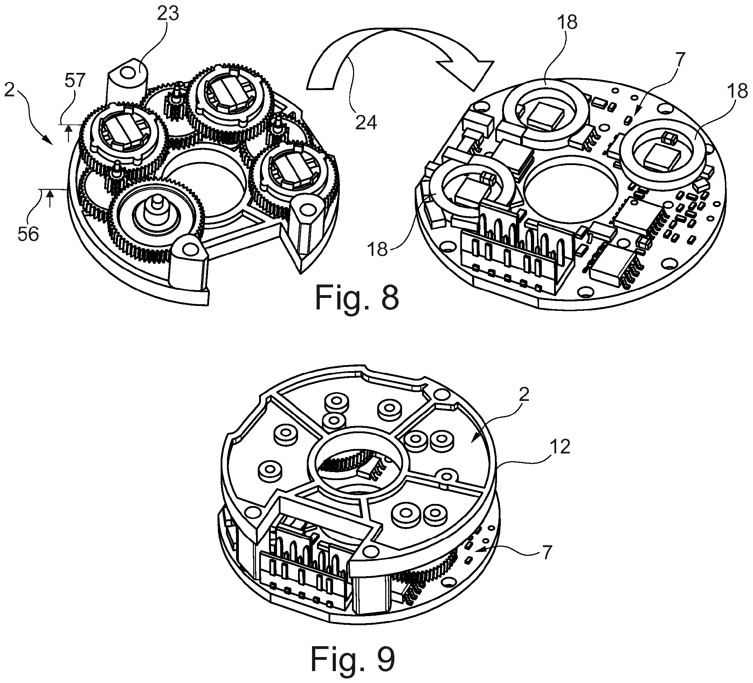

Die Figuren 8 und 9 zeigen die besonders einfache Montage des Getriebes 2 auf der Leiterplatte 7, wo erkennbar ist, dass in der ersten Ausführungsform - die mit Abstandsringen 18 arbeitet - das Untersetzungsgetriebe 2 in Pfeilrichtung 24 auf die Leiterplatte 7 aufgeschnappt wird, wobei Haltelappen 23 vorhanden sind, die sich auf der Oberfläche der Leiterplatte abstützten und mit dieser über nicht näher dargestellte Schraubelemente verschraubt sind. Es ergibt sich somit der Gesamtaufbau nach Figur 9.

In Figur 8 sind auch die unterschiedlichen Getriebeebenen der Zahnräder 14 und 20 eingezeichnet und zwar durch Darstellung der Ebenen 56 und 57.

Die Figur 10 zeigt die zweite Ausführungsform, bei der die abstandshaltenden Abstandsringe 18 entfallen und stattdessen die technische Lehre gemäß dem unabhängigen Anspruch 1 zur präzisen spielfreien Lagerung der magnetischen Getriebezahnräder 14 verwendet wird.

In Figur 10 ist ein Zwischenrad 26 dargestellt, das in einer kurzbauenden Achse 19c gelagert ist.

Es sind insgesamt drei Zwischenzahnräder 26 vorhanden und die dazugehörenden Achsstummel 19c sind in Figur 6 erkennbar.

Wichtig bei dieser Ausführungsform ist, dass die reibungserhöhenden Abstandsringe 18 entfallen können und stattdessen eine unter magnetischer Haltekraft stehende Aufschnappsicherung vorhanden ist.

Die Achse 19a ist in der Umspritzung 52 in der Trägerplatte 12 drehfest und verschiebungsgesichert aufgenommen und über eine längere axiale Länge geführt, sodass diese spielfrei gelagert ist.

Das vordere freie Ende der Achse 19a ist mit einer Ringnut verminderten Durchmessers versehen, in welche ein Ringansatz 27 vergrößerten Durchmessers in der Innenbohrung des Getriebezahnrades 14 eingreift.

Das Getriebezahnrad wird deshalb einfach auf den freien Achsstummel aufgesteckt, sodass die Ringnut 25 formschlüssig in den Ringansatz 27 des Getriebezahnrades 14 eingreift und hierdurch eine Drehlagerung gegeben ist.

Weil aber eine solche Drehlagerung stets mit einem gewissen axialen Spiel behaftet ist, ist eine axiale magnetische Vorspannung vorgesehen.

Zu diesem Zweck ist vorgesehen, dass der in dem Material des Getriebezahnrades im Bereich einer Umspritzung 48 eingebettete Permanentmagnet 22 nunmehr mit seiner Einbettungsstirnseite in Pfeilrichtung 50 eine magnetische Kraft auf den aus einem magnetischen Material bestehenden Achse 19a ausübt, sodass eine in Pfeilrichtung 49 wirkende Zugkraft erzeugt wird.

Auf diese Weise wird somit das Getriebezahnrad 14 in Pfeilrichtung 55 nach oben gegen die Achse 19a gezogen und liegt mit einem zugeordneten ringförmigen und stirnseitig angeordneten Ansatz an einer zugeordneten Anschlagfläche in der Trägerplatte 12 an.

Damit ergibt sich eine spielfreie axiale Verschiebungssicherung, die auch bei längerer Lebensdauer der gesamten Anordnung stets für einen gleichmäßigen und nicht veränderbaren Abstand 54 zu dem darunter liegenden Hallsensor 16 führt.

In der Zeichnung nach Figur 10 ist die magnetisch sensitive Oberfläche lediglich als Referenzlinie 53eines nicht real dargestellten Hallsensors 16 eingezeichnet.

Die Figur 11 zeigt nun die sogenannte einstöckige Ausbildung des erfindungsgemäßen Multiturn- Drehgebers 1, bei dem erkennbar ist, dass ein Antriebsritzel 28 drehfest mit der Welle 4 verbunden ist, welches mit dem Antriebsrad 21 des Getriebes 2 in kämmendem Eingriff ist.

Ferner ist erkennbar, dass drehfest mit der Welle 4 ein Scheibenflansch 29 verbunden ist, auf dem eine optisch wirksamen Codescheibe 31 befestigt ist.

Unterhalb der Codescheibe 31 ist eine Beleuchtungseinheit 32 angeordnet, die einen Lichtstrahl in Pfeilrichtung 33 gegen die Unterseite der Codescheibe 31 lenkt, die von diesem Lichtstrahl durchsetzt wird und das entsprechende Messsignal von einem optisch empfindlichen Singleturn-Abtaster 34 empfangen wird.

Der Singleturn-Abtaster 34 ist demnach an der Unterseite der Leiterplatte 7 angeordnet, während die zugeordneten Hallsensoren 16a, 16b, 16c auf der Oberseite der Leiterplatte angeordnet sind.

Die Welle 4 trägt im Übrigen noch ein Kugellager 30 und es handelt sich demnach um einen einstöckigen Aufbau, weil die Leiterplatte 7 die einzige verwendete Leiterplatte ist.

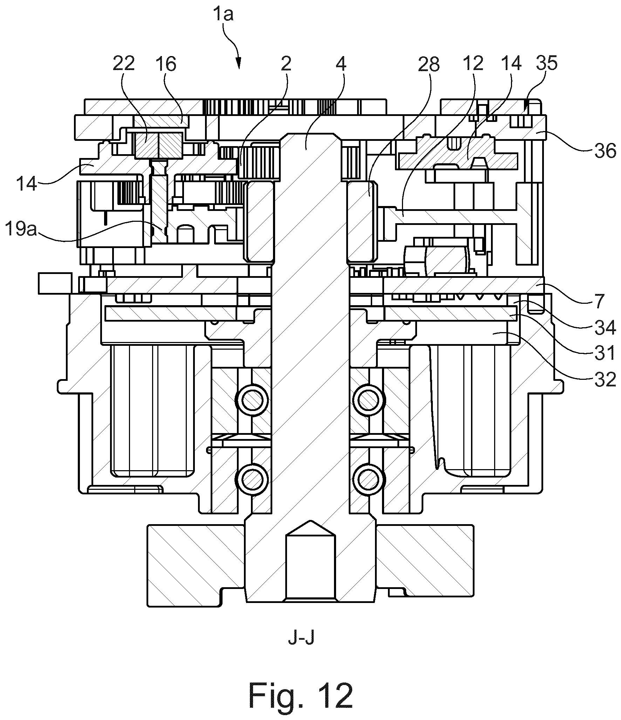

Im Gegensatz hierzu ist in Figur 12 ein Multiturn- Drehgeber 1a gezeigt, der einen zweistöckigen Aufbau aufweist, der darin besteht, dass die Leiterplatte 7 mit darauf befestigten Bauelementen 11 vorhanden ist und nur noch eine Singleturn- Abtastung an der Unterseite der Leiterplatte - wie in Figur 11 dargestellt - vorhanden ist, während die magnetische Abtastung nunmehr an die Oberseite des Getriebes 2 verlegt wurde.

Die gleichen Teile sind mit den gleichen Bezugszeichen versehen und es ist erkennbar, dass das Untersetzungsgetriebe im Prinzip um 180 Grad gedreht wurde und die vorher nach unten gerichteten Permanentmagneten 22 nunmehr nach oben gerichtet sind und gegen die Unterseite einer die Deckplatte bildenden weiteren Leiterplatte 35 gerichtet sind, an deren Unterseite die Hallsensoren 16a, 16b, 16c angeordnet sind.

Durch die Anordnung von zwei einander gegenüber liegenden Leiterplatten 7, 35 ergibt sich gleichfalls ein kompakter Aufbau und die zweite Leiterplatte 35 bildet die Möglichkeit, im - sich in Richtung auf das Untersetzungsgetriebe ergebene Bauraum - noch weitere raumgreifende Bauelemente anzuordnen, was beim erst genannten Ausführungsbeispiel nach Figur 11 nicht möglich war.

Es kann im Übrigen vorgesehen sein, dass die erste Leiterplatte 7 mit der zweiten Leiterplatte 35 durch flexible Leiterbahnen verbunden ist, die in der Darstellung nach Figur 12 nicht gezeigt sind.

Zwischen der Unterseite der Leiterplatte 35 und der Oberseite des Getriebes kann im Übrigen noch eine Zwischenplatte 36 vorgesehen sein, die den definierten Abstand zwischen der Leiterplatte 35 und den Permanentmagneten 22 des Getriebes 2 einstellt.

Somit kann die Zwischenplatte 36 die Funktion der abstandshaltenden Ringe 18 übernehmen.

Selbstverständlich ist auch bei dieser Ausführungsform - im Sinn der Beschreibung nach Figur 10 - vorgesehen, dass eine magnetisch vorgespannte Aufschnappsicherung zwischen den jeweiligen Achsen 19a und der zugeordneten Permanentmagneten 22 vorhanden ist.

In diesem Fall kann auch die Zwischenplatte 36 entfallen.

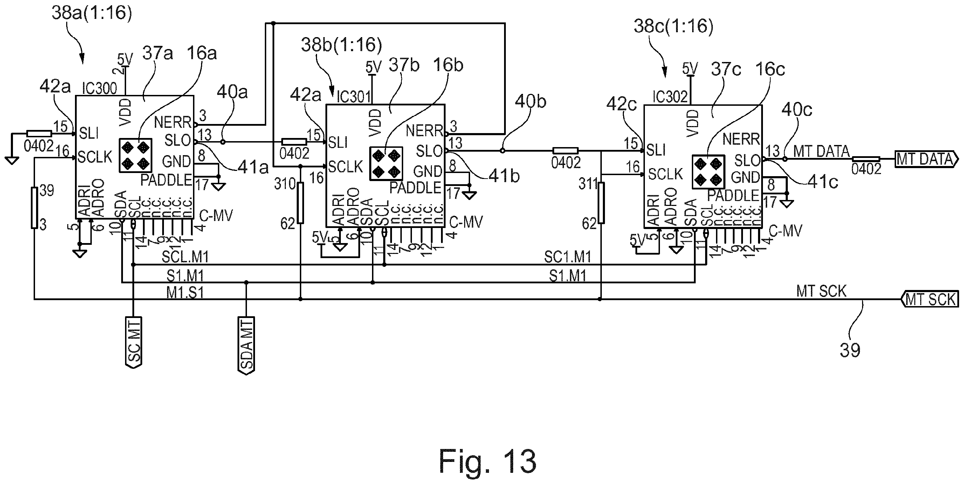

In Figur 13 ist nun eine bevorzugte Ausführungsform einer Auswerteschaltung dargestellt, bei der wesentlich ist, dass jeweils jedem magnetischen Getriebezahnrad und dem dort eingebetteten Permanentmagneten 22 ein Sensor 37a, 37b, 37c zugeordnet ist.

Der Sensor besteht aus einer Matrix von Hallsensoren 16a, 16b, 16c, wobei jeder Hallsensor im Wesentlichen aus vier verteilt angeordneten Hallsensoren besteht.

Statt einer Matrix aus mehreren Hallsensoren kann auch ein einziger Hallsensor vorgesehen sein.

Wichtig bei der Auswerteschaltung nach Figur 13 ist, dass zunächst ein Clock-Signal auf der Clock- Leitung 39 zu allen Sensoren 37 parallel zugeführt wird und dass der Dateneingang 42a am ersten Sensor auf Masse liegt, und dass in dem ersten Sensor nunmehr die erste Untersetzungsstufe für das erste Getriebezahnrad 14a vorgesehen ist.

Es werden demnach die Sensoren 37a, b, c in kaskadierten Stufen 38a, 38b, 38c angeordnet und das jeweilige Ausgangssignal am Datenausgang 41a des ersten Sensors 37a wird erfindungsgemäß dem ersten Dateneingang 42b der zweiten Stufe 38b zugeführt.

Der Datenausgang 41b in der zweiten Stufe 38b wird über die Datenausgangsleitung 40b in den Eingang 42c der dritten Stufe 38c eingeleitet und deren Datenausgang 41c bildet ein kombiniertes Datenwort, welches aus den Singleturn- Datenwort und dem Multiturn-Datenwort besteht.

Alle Datenwörter werden seriell hintereinander angeordnet und ineinander verschachtelt.

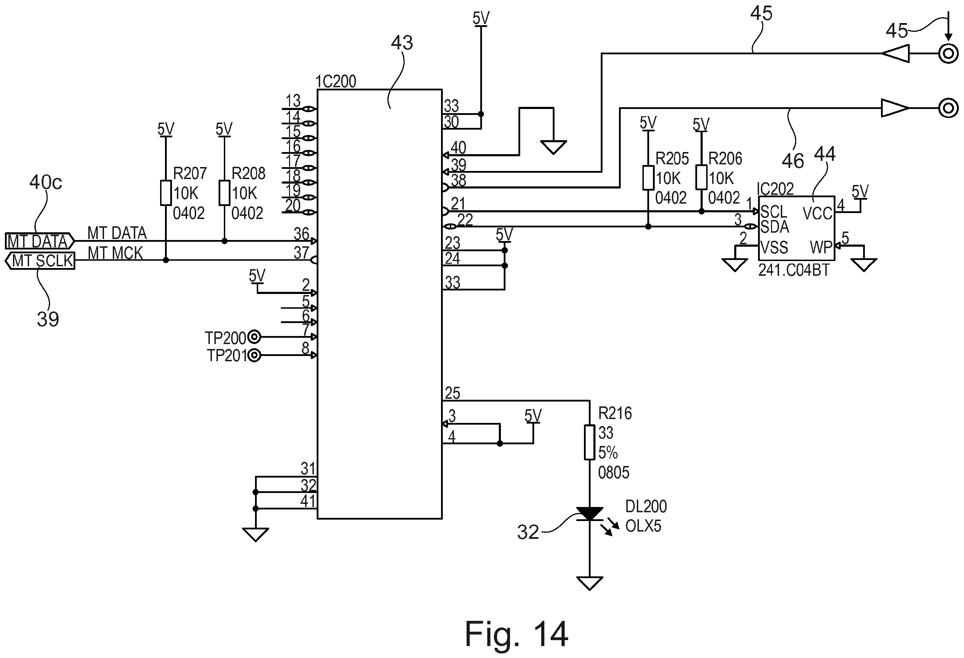

Das so auf der Datenausgangsleitung 40c entstehende Multiturn- Codewort wird in serieller Form der Singleturn-Signalverarbeitung 43 in Figur 14 zugeführt.

Der dort dargestellte Baustein bildet das Singleturn-Lagewort und bildet mit dem Multiturn-Lagewort am Datenausgang 46 ein Gesamt-Positionswort, welches aus dem Singleturn-Wert und dem Multiturn-Wert besteht.

Ein übergeordneten Master - nicht zeichnerisch dargestellt - fordert über die Clock-Leitung 45 die Ausgabe des kombinierten Datenwortes aus der Signalverarbeitung 43 auf den Datenausgang 46 an.

Es ist noch ein Speicher 44 vorhanden, mit dem die Signalverarbeitung 43 konfiguriert werden kann.

Insgesamt ergibt sich durch die Daisy-Chain-Datenverarbeitung in der Auswerteschaltung nach Figur 13 und 14 der Vorteil, dass im Bereich der Sensoren 37a, b, c, auch gleichzeitig die digitalen Auswertungen stattfinden, wodurch auf externe separate Bauteile, die einen eigenen Bauaufwand und Bauraum erfordern, verzichtet werden kann.

Ebenso ist der Programmieraufwand minimiert, weil die einzelnen Sensoren gleich über die digitalen Mittel programmiert werden können.

### Zeichnungslegende

- 1, 1a: Multiturn- Drehgeber
- 2: Untersetzungsgetriebe
- 3: Ausnehmung
- 4: Welle
- 5: Lappen
- 6: Stütze
- 7: Leiterplatte
- 8: Ringflansch a, b
- 9: Gehäuse
- 10: Befestigungsplatte
- 11: Bauelemente (von 7)
- 12: Trägerplatte
- 13: Achsaufnahme
- 14: magnetisches Getriebezahnrad
- 15: Zahnrad
- 16: Hallsensor a, b, c
- 17: Anschlußstecker
- 18: Abstandsring
- 19: Achse a, b
- 20: Getriebezahnrad
- 21: Antriebsrad
- 22: Permanentmagnet
- 23: Haltelappen
- 24: Pfeilrichtung
- 25: Ringnut
- 26: Zwischenrad
- 27: Ringansatz
- 28: Antriebsritzel (von 4)
- 29: Scheibenflansch
- 30: Kugellager
- 31: optische Codescheibe
- 32: Beleuchtungseinheit
- 33: Pfeilrichtung
- 34: Singelturn-Abtastung
- 35: Leiterplatte (2. Platte)
- 36: Zwischenplatte
- 37: Sensor a, b, c
- 38: Stufe a, b, c
- 39: Clock- Leitung
- 40: Datenausgangsleitung a, b, c
- 41: Datenausgang a, b, c
- 42: Dateneingang a, b, c
- 43: Signalverarbeitung
- 44: Speicher
- 45: Clock- Leitung (Feldbus)
- 46 47: Datenausgang (Multi- Wert)
- 48: Umspritzung (von 22)
- 49: Pfeilrichtung
- 50: Pfeilrichtung
- 51: Anschlagfläche
- 52: Umspritzung
- 53: Referenzlinie (16)
- 54: Abstand
- 55: Pfeilrichtung
- 56: untere Antriebsebene (von 2)
- 57: obere Antriebsebene
- 58: Abstand

## Patentansprüche

1. Multiturn-Winkelmessgerät zur Messung der Mehrfachumdrehung einer Welle (4), bestehend aus einem ersten Codeträger (31) mit einer optischen Singleturn-Abtastung (34) zur Erfassung der absoluten Position der Welle und einem zweiten Codeträger zur Messung der Anzahl der Umdrehungen der Welle (4), wobei zwischen dem ersten Codeträger (31) und dem zweiten Codeträger ein Untersetzungsgetriebe (2) angeordnet ist, und der zweite Codeträger aus einer Anzahl von Permanentmagneten (22) besteht, deren Lage von einer gehäusefesten Anordnung von Hallsensoren (16a-16c) erfasst wird, **dadurch gekennzeichnet, dass** jeweils die Permanentmagneten (22) im Kunststoffmaterial der Getriebezahnräder (20) des Untersetzungsgetriebes (2) eingebettet sind und dass das jeweilige Getriebezahnrad (20) auf seiner zugeordneten Achse (19a-b) mit einer Einschnappsicherung gehalten ist, wobei zwischen der magnetisch leitenden Achse (19a-19b) und dem Permanentmagneten (22) eine magnetische Zugkraft besteht.

2. Multiturn-Winkelmessgerät nach Anspruch 1, **dadurch gekennzeichnet, dass** die magnetische Zugkraft eine axiale Vorspannkraft ist.

3. Multiturn-Winkelmessgerät nach Anspruch 1 oder 2, **dadurch gekennzeichnet, dass** lediglich eine einzige Leiterplatte (7) vorhanden ist, an deren Unterseite die Singleturn-Abtastung (34) und an deren Oberseite die magnetische Multiturn-Abtastung angeordnet ist.

4. Multiturn-Winkelmessgerät nach Anspruch 1 oder 2, **dadurch gekennzeichnet, dass** ein zweistöckiger Aufbau mit zwei Leiterplatten (7, 35) vorhanden ist, die in gegenseitigem axialem Abstand angeordnet sind.

5. Multiturn-Winkelmessgerät nach Anspruch 4, **dadurch gekennzeichnet, dass** die zweite Leiterplatte (35) oberhalb des Getriebes (2) und die erste Leiterplatte unterhalb des Getriebes (2) angeordnet sind.

6. Multiturn-Winkelmessgerät nach Anspruch 4 oder 5, **dadurch gekennzeichnet, dass** die magnetische Abtastung auf der zweiten Leiterplatte (35) angeordnet ist.

7. Multiturn-Winkelmessgerät nach einem der Ansprüche 1 bis 6, **dadurch gekennzeichnet, dass** eine Auswerteschaltung vorgesehen ist, die in einer ersten Stufe einen ersten Sensor (37) vorsieht, in dem der jeweilige Hallsensor (16) eingebettet ist, und dass mehrere Hallsensoren (16) unter Bildung einer Matrix im Sensor (37) eingebettet sind.

8. Multiturn-Winkelmessgerät nach einem der Ansprüche 1 bis 7 mit einer Auswerteschaltung, **dadurch gekennzeichnet, dass** die den Sensoren (37) zugeordneten, stufenweise angeordneten Auswerteschaltungen in der Art einer Daisy-Chain-Schaltung seriell hintereinander geschaltet sind.

## Claims

1. Multi-turn angle measurement device for measuring multiple revolution of a shaft (4), consisting of a first code carrier (31) with an optical single-turn scanning function (34) for detecting the absolute position of the shaft and a second code carrier for measuring the number of revolutions of the shaft (4), wherein a reduction gear (2) is arranged between the first code carrier (31) and the second code carrier, and the second code carrier consists of a number of permanent magnets (22), the position of which is detected by an arrangement of Hall sensors (16a-16c) fixed to the housing, **characterised in that** respectively the permanent magnets (22) are embedded in the plastic material of the transmission gears (20) of the reduction gear (2) and **in that** the respective transmission gear (20) is held on its assigned axle (19a-b) with a snapping mechanism, wherein a magnetic attraction exists between the magnetically conductive axle (19a-19b) and the permanent magnet (22).

2. Multi-turn angle measurement device according to claim 1, **characterised in that** the magnetic attraction is an axial pretensioning force.

3. Multi-turn angle measurement device according to claim 1 or 2, **characterised in that** only a single conductor plate (7) is present, on the underside of which the single-turn scanning function (34) is arranged and on the upper side of which the magnetic multi-turn scanning function is arranged.

4. Multi-turn angle measurement device according to claim 1 or 2, **characterised in that** a two-level design with two conductor plates (7, 35), which are arranged at a mutual axial distance, is present.

5. Multi-turn angle measurement device according to claim 4, **characterised in that** the second conductor plate (35) is arranged above the transmission (2) and the first conductor plate is arranged below the transmission (2).

6. Multi-turn angle measurement device according to claim 4 or 5, **characterised in that** the magnetic scanning function is arranged on the second conductor plate (35).

7. Multi-turn angle measurement device according to one of claims 1 to 6, **characterised in that** an evaluation circuit is provided, which, in a first step, provides a first sensor (37) in which the respective Hall sensor (16) is embedded, and **in that** several Hall sensors (16) are embedded in the sensor (37) thus forming a matrix.

8. Multi-turn angle measurement device according to one of claims 1 to 7 with an evaluation circuit, **characterised in that** the staggered evaluation circuits assigned to the sensors (37) are serially connected in the form of a daisy chain circuit.

## Revendications

1. Appareil de mesure d'angle multitour pour mesurer la rotation multiple d'un arbre (4), constitué d'un premier support de code (31) comprenant un balayage optique monotour (34) pour détecter la position absolue de l'arbre et un deuxième support de code pour mesurer le nombre de rotations de l'arbre (4), dans lequel entre le premier support de code (31) et le deuxième support de code est disposé un engrenage réducteur (2), et le deuxième support de code est constitué de plusieurs aimants permanents (22) dont la position est détectée par un agencement de capteurs à effet Hall (16a-16c) solidaire du boîtier, **caractérisé en ce que** les aimants permanents (22) sont intégrés chacun dans la matière plastique des roues dentées d'engrenage (20) de l'engrenage réducteur (2) et **en ce que** la roue dentée d'engrenage (20) respective est maintenue sur son axe associé (19a-b) avec un blocage à enclenchement, dans lequel il y a entre l'axe conducteur magnétiquement (19a-19b) et l'aimant permanent (22) une force de traction magnétique.

2. Appareil de mesure d'angle multitour selon la revendication 1, **caractérisé en ce que** la force de traction magnétique est une force de précharge axiale.

3. Appareil de mesure d'angle multitour selon la revendication 1 ou 2, **caractérisé en ce qu'**une seule carte imprimée (7) est présente, sur le côté inférieur de laquelle est disposé le balayage optique monotour (34), et sur le côté supérieur de laquelle est disposé le balayage magnétique multitour.

4. Appareil de mesure d'angle multitour selon la revendication 1 ou 2, **caractérisé en ce qu'**une construction à deux étages est présente, comprenant deux cartes imprimées (7, 35) qui sont disposées avec un écartement axial mutuel.

5. Appareil de mesure d'angle multitour selon la revendication 4, **caractérisé en ce que** la deuxième carte imprimée (35) est disposée au-dessus de l'engrenage (2) et la première carte imprimée au-dessous de l'engrenage (2).

6. Appareil de mesure d'angle multitour selon la revendication 4 ou 5, **caractérisé en ce que** le balayage magnétique est disposé sur la deuxième carte imprimée (35).

7. Appareil de mesure d'angle multitour selon l'une des revendications 1 à 6, **caractérisé en ce qu'**il est prévu un circuit d'analyse qui prévoit dans un premier niveau un premier capteur (37) dans lequel le capteur à effet Hall (16) respectif est intégré, et **en ce que** plusieurs capteurs à effet Hall (16) sont intégrés dans le capteur (37) en formant une matrice.

8. Appareil de mesure d'angle multitour selon l'une des revendications 1 à 7 avec un circuit d'analyse, **caractérisé en ce que** les circuits d'analyse associés aux capteurs (37) et disposés par niveaux sont montés en série les uns derrière les autres, à la manière d'un circuit en guirlande.
